# EUROPEAN PATENT APPLICATION

(11) **EP 2 107 560 A1**
(43) Date of publication of application: **07.10.2009**
(21) Application number: 09004535.2
(22) Date of filing: 30.03.2009
(51) Int. Cl.: G11B 5/855, G11B 5/86

(54) **Magnetic transfer master carrier and magnetic recording medium**

(30) Priority: 31.03.2008 JP 2008093819
(71) Applicant: Fujifilm Corporation, Tokyo 106-8620 (JP)
(72) Inventor: Kubota, Hideyuki, Odawara-shi Kanagawa (JP); Nagao, Makoto, Odawara-shi Kanagawa (JP)
(74) Representative: Siegert, Georg

(57) **Abstract**

To provide a magnetic transfer master carrier including a base material, a concavo-convex pattern formed by arranging a plurality of convex portions on a surface of the base material, and a magnetic layer provided at least on upper surfaces of the convex portions, wherein the magnetic layer is formed by an ion gun deposition method in which a target material is irradiated with an ion beam and a layer is deposited with sputter particles sputtered from the target material.

## Description

### BACKGROUND OF THE INVENTION

### Field of the Invention

The present invention relates to a magnetic transfer master carrier enabled to reduce the occurrence of reversal of initial magnetization at portions where the initial magnetization should not be reversed and to greatly improve the quality of a transfer signal, by reducing the thickness of a magnetic layer formed on side surfaces of convex portions; and a magnetic recording medium.

### Description of the Related Art

In recent years, magnetic recording and reproducing devices tend to be made higher in recording density in order to realize both compactness and large capacity. In the field of hard disk drives (HDDs) that are typical magnetic storage devices, in particular, technologies are advancing dramatically.

Along with the increase in the amount of information, high-density magnetic recording media which are so large in capacity as to be able to record a great deal of information, inexpensive, and capable of reading out necessary information preferably in short periods of time, in other words capable of so-called high-speed access, are hoped for. As to these high-density magnetic recording media, an information recording area is composed of narrow tracks, and a so-called tracking servo technology plays a great role in performing accurate scanning with a magnetic head within a narrow track width and reproducing a signal at a high S/N ratio. In order to execute this tracking servo, sector servo systems are widely employed.

A sector servo system is a system in which servo information, for example a servo signal for determining a track position, an address information signal related to the track, a reproduction clock signal, etc., is recorded in servo fields accurately arranged according to a fixed angle, etc. on a data surface of a magnetic recording medium such as a magnetic disk, then a magnetic head reads the servo information as it scans the servo fields, and the magnetic head confirms its own position and makes a positional correction.

The servo information needs to be recorded on a magnetic recording medium in advance as a preformat when the magnetic recording medium is produced, and today preformatting is carried out using a dedicated servo recording apparatus. A servo recording apparatus currently used includes, for example, a magnetic head whose head width is equivalent to approximately 75% of a track pitch, wherein while a magnetic disk is being rotated with the magnetic head placed close to the magnetic disk, a servo signal is recorded as the magnetic head is moved from the outer circumference toward the inner circumference of the magnetic disk on a 1/2 track basis. For this reason, preformat recording on each magnetic disk takes a long time, which causes a problem in terms of production efficiency, and a rise in costs.

Accordingly, as a method for performing preformatting accurately and efficiently, there has been proposed a method in which information regarding a master recording medium that has a pattern corresponding to servo information is magnetically transferred to a magnetic recording medium (refer to Japanese Patent Application Laid-Open (JP-A) Nos. 2003-203325, 2000-195048 and 2001-297435, and US Patent No. 7,218,465).

In this magnetic transfer, a master carrier that has a magnetic layer pattern corresponding to information (e.g. servo information) to be transferred to a magnetic recording medium (slave medium) such as a transfer magnetic disk is used, and a recording magnetic field is applied with the master carrier and the magnetic recording medium (slave medium) closely attached to each other; by doing so, a magnetic pattern corresponding to the magnetic layer pattern of the master carrier is magnetically transferred to the magnetic recording medium. This method is advantageous in that recording can be statically performed without changing the position of the master carrier relative to the position of the magnetic recording medium, accurate recording of preformatted information is possible, and the time spent on the recording is very short.

JP-A No. 2001-297435 mentioned above discloses a magnetic transfer technique based upon a perpendicular magnetic recording method in which the magnetization direction for recording is perpendicular to the medium surface.

Greater improvement in recording density can be expected from this perpendicular magnetic recording method than from an in-plane magnetic recording method; accordingly, along with the present-day demand for higher recording density, a perpendicular magnetic recording technology has been developed and put to practical use.

In the case where information is magnetically transferred to a perpendicular magnetic recording medium, firstly, a DC magnetic field is applied to the perpendicular recording medium, an object to which the information is to be transferred (slave disk), in a direction perpendicular to the disk surface, and a magnetic layer (recording layer) of the disk is thus initially magnetized. After this initial magnetization, a DC magnetic field is applied in the opposite direction to the direction of the initial magnetization, with a transfer original disk (master disk) and the slave disk closely attached to each other; by doing so, information corresponding to a concavo-convex pattern on the surface of the transfer original disk is transferred to the slave disk.

Parenthetically, in the case where a perpendicular magnetic layer is formed on a magnetic transfer master carrier having a concavo-convex pattern, the present inventors have revealed that if the magnetic layer is thick on side surfaces of convex portions, there is an adverse effect on the signal quality, causing initial magnetization to be reversed at portions where the initial magnetization should not be reversed, and thus an advantage of the perpendicular magnetic layer that essentially exhibits superior magnetic transfer properties is lost. Accordingly, it is desirable that the magnetic layer be made as thin as possible on the side surfaces of the convex portions.

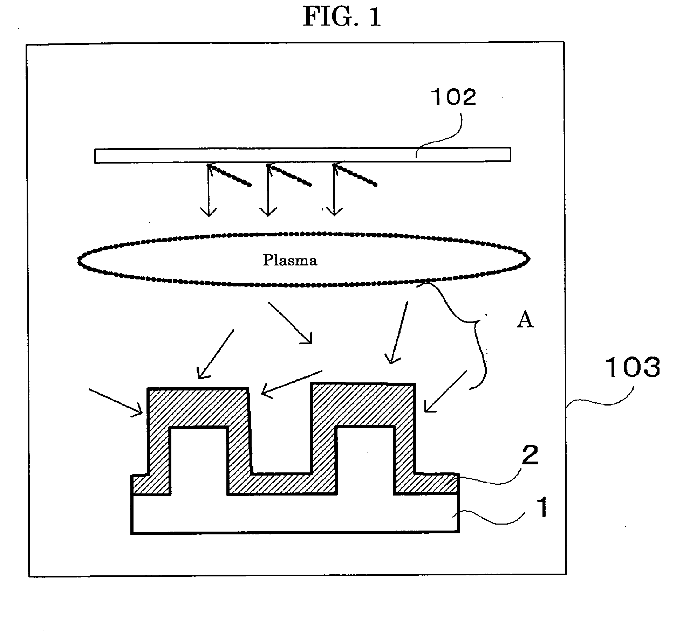

However, as shown in FIG. 1, when a magnetic layer is formed using a very common sputtering method, the presence of plasma in a deposition chamber 103 causes sputter particles sputtered from a target material 102 to disperse, with many of the sputter particles being diagonal elements, and thus the thickness of a magnetic layer 2 on side surfaces of convex portions of a base material 1 becomes equivalent to 1/4 or more of the thickness of the magnetic layer 2 on upper surfaces of the convex portions. This phenomenon becomes more conspicuous as the width of a concavo-convex portion (bit length) becomes smaller, and in reality a solution to this problem is hoped for. Here, note that in FIG. 1, the arrows A represent directions in which the sputter particles fly in a dispersing manner.

### BRIEF SUMMARY OF THE INVENTION

An object of the present invention is to solve the problems in related art and achieve the following object. An object of the present invention is to provide a magnetic transfer master carrier enabled to reduce the occurrence of reversal of initial magnetization at portions where the initial magnetization should not be reversed and to greatly improve the quality of a transfer signal, by reducing the thickness of a magnetic layer formed on side surfaces of convex portions; and a magnetic recording medium.

As a result of carrying out earnest examinations in an attempt to solve the above-mentioned problems, the present inventors have obtained the following knowledge. They have found that in the case of forming a perpendicular magnetic layer on a magnetic transfer master carrier having a concavo-convex pattern, if the magnetic layer is thick on side surfaces of convex portions, there is an adverse effect on the signal quality, causing initial magnetization to be reversed at portions where the initial magnetization should not be reversed; also, they have found that it is particularly desirable to form the magnetic layer by an ion gun deposition method in order to make the magnetic layer thin on the side surfaces of the convex portions.

Conventionally, in attempts to improve the signal quality and reduce the occurrence of reversal of initial magnetization at portions where the initial magnetization should not be reversed, a variety of studies have been carried out regarding methods for forming magnetic films on magnetic transfer master carriers and methods for initializing magnetic recording media. Note that hereinafter, for the sake of simplicity, the expression "reversal of initial magnetization at portions where the initial magnetization should not be reversed" may be shortened to "reversal of initial magnetization".

However, the fact that the thickness of a magnetic layer on side surfaces of convex portions of a magnetic transfer master carrier has an effect on the signal quality and reversal of initial magnetization has not conventionally been known, and it is therefore a new piece of knowledge found by the present inventors.

The present invention is based upon the above-mentioned knowledge of the present inventors, and means for solving the problems are as follows.
<1> A magnetic transfer master carrier including a base material, a concavo-convex pattern formed by arranging a plurality of convex portions on a surface of the base material, and a magnetic layer provided at least on upper surfaces of the convex portions, wherein the magnetic layer is formed by an ion gun deposition method in which a target material is irradiated with an ion beam and a layer is deposited with sputter particles sputtered from the target material.
<2> The magnetic transfer master carrier according to <1>, wherein the distance between a surface of the target material and each of the upper surfaces of the convex portions on the base material is 200 mm or more.
<3> The magnetic transfer master carrier according to one of <1> and <2>, wherein when the arithmetic mean value of thicknesses of the magnetic layer on the upper surfaces of the convex portions is denoted by A, and the maximum thickness of the magnetic layer on side surfaces perpendicular to the upper surfaces is denoted by B, the ratio B/A is 1/6 or less.
<4> The magnetic transfer master carrier according to any one of <1> to <3>, wherein the magnetic layer has perpendicular magnetic anisotropy.
<5> A magnetic recording medium produced by a magnetic transfer method using the magnetic transfer master carrier according to any one of <1> to <4>.

According to the present invention, it is possible to solve the problems in related art and provide the following: a magnetic transfer master carrier enabled to reduce the occurrence of reversal of initial magnetization at portions where the initial magnetization should not be reversed and to greatly improve the quality of a transfer signal, by reducing the thickness of a magnetic layer formed on side surfaces of convex portions; and a magnetic recording medium.

### BRIEF DESCRIPTION OF THE DRAWINGS

FIG. 1 is a schematic diagram for explaining a sputtering method conventionally used to form a magnetic layer.
FIG. 2 is a schematic diagram for explaining an ion gun deposition method.
FIG. 3 is a schematic diagram for explaining the thickness of a magnetic layer formed on upper surfaces of convex portions and the thickness of the magnetic layer formed on side surfaces of the convex portions, in a magnetic transfer master carrier of the present invention.
FIG. 4A is a schematic diagram showing a step in a magnetic transfer method according to an embodiment of the present invention (Part 1).
FIG. 4B is a schematic diagram showing a step in the magnetic transfer method according to the embodiment of the present invention (Part 2).
FIG. 4C is a schematic diagram showing a step in the magnetic transfer method according to the embodiment of the present invention (Part 3).
FIG. 5 is a schematic cross-sectional view of a slave disk.
FIG. 6 is a schematic cross-sectional view showing the direction in which a magnetic layer (recording layer) is magnetized after an initially magnetizing step.
FIG. 7 is a cross-sectional view showing an embodiment of a master disk.
FIG. 8A is a process diagram showing a method for producing a master disk (Part 1).
FIG. 8B is a process diagram showing the method for producing a master disk (Part 2).
FIG. 8C is a process diagram showing the method for producing a master disk (Part 3).
FIG. 8D is a process diagram showing the method for producing a master disk (Part 4).
FIG. 8E is a process diagram showing the method for producing a master disk (Part 5).
FIG. 8F is a process diagram showing the method for producing a master disk (Part 6).
FIG. 8G is a process diagram showing the method for producing a master disk (Part 7).
FIG. 8H is a process diagram showing the method for producing a master disk (Part 8).
FIG. 8I is a process diagram showing the method for producing a master disk (Part 9).
FIG. 8J is a process diagram showing the method for producing a master disk (Part 10).
FIG. 9 is a plan view of a master disk.
FIG. 10 is an explanatory diagram showing a magnetic transfer step.
FIG. 11 is a schematic structural diagram of a magnetic field applying device used in a magnetic transfer step.
FIG. 12 is a schematic cross-sectional view showing the direction in which a magnetic layer is magnetized after a magnetic transfer step.

### DETAILED DESCRIPTION OF THE INVENTION

### (Magnetic Transfer Master Carrier)

A magnetic transfer master carrier of the present invention includes: a base material; a concavo-convex pattern formed by arranging a plurality of convex portions on a surface of the base material; a magnetic layer provided at least on upper surfaces of the convex portions; and, if necessary, other layer(s).

### <Magnetic Layer>

The magnetic layer is characterized by being formed in accordance with an ion gun deposition method.

### - Ion Gun Deposition Method -

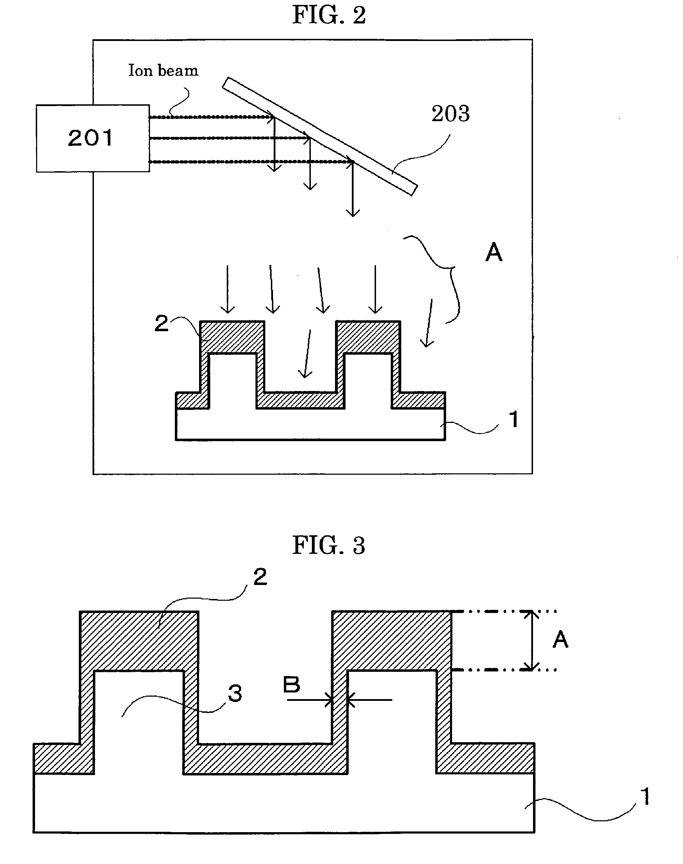

FIG. 2 is a schematic diagram for explaining an ion gun deposition method. In FIG. 2, the arrows A represent directions in which sputter particles fly in a dispersing manner.

The ion gun deposition method is also called "ion-beam sputtering" and is a method in which, as shown in FIG. 2, an ion beam is applied from an ion gun 201 toward a target material 203, and a layer is deposited over a base material 1, utilizing sputter particles sputtered from the target material 203. It should be noted that although the ion gun deposition method includes a sputtering process as described above, the sputtering process is described in the present description as a process which is different from a sputtering process (for example, a process in which plasma is formed in a deposition chamber, an inactive gas such as argon is made to collide with a target material, and a thin film is thus formed over a base material or the like placed facing the target material) conventionally used for forming a magnetic layer.

The ion gun is not particularly limited as long as it can generate ions and emit the ions to the target material, and a known ion gun can be used therefor. Normally, the ion gun includes an ion source, and a high voltage applying unit to emit the ions.

The ion beam applied from the ion gun toward the target material is not particularly limited and may be suitably selected in accordance with the intended use. Examples thereof include an argon ion beam.

The target material is not particularly limited as long as it enables a magnetic layer to be formed on the base material, and the target material may be suitably selected in accordance with the intended use. Examples thereof include Co (cobalt), Co alloys (CoPtCr, CoCr, CoPtCrTa, CoPtCrNbTa, CoCrB, CoNi, etc.), Co alloy-SiO₂, Co alloy-TiO₂, Fe and Fe alloys (FeCo, FePt, FeCoNi, etc.).

The pressure inside a deposition chamber in the ion gun deposition method is not particularly limited and may be suitably selected in accordance with the intended use; however, it is preferably 0.0001 Pa to 0.2 Pa, more preferably 0.0001 Pa to 0.05 Pa, even more preferably 0.0001 Pa to 0.01 Pa. When the pressure is higher than 0.2 Pa, sputter particles are liable to disperse, thereby possibly leading to a decrease in their straight advancing property. When the pressure is made lower than 0.0001 Pa, an ultrahigh vacuum state is created, so that there are many equipment-related conditions required, which is unrealistic.

The distance between the target material surface and each of the upper surfaces of convex portions on the base material in the ion gun deposition method is not particularly limited and may be suitably selected in accordance with the intended use; however, it is preferably 200 mm or greater, more preferably 200 mm to 400 mm, even more preferably 200 mm to 300 mm. When the distance is less than 200 mm, there is a possibility that it is less than or equal to the mean free path of sputter particles, and dispersion of the sputter particles may intensify.

Note that the "distance between the target material surface and each of the upper surfaces of convex portions on the base material" specifically means the shortest distance between a central point on the target material surface and each of the upper surfaces of the convex portions on the base material. Here, the "target material surface" means the surface on the side irradiated with the ion beam. As to the "central point on the target material surface", when the target material is a flat plate which is rectangular as seen from above, the "central point" means the intersection of the diagonals on the surface of the target material. Meanwhile, when the target material is a flat plate having a shape other than a rectangle as seen from above, the center of a circle where the square sum of the deviation from an arbitrarily set reference circle becomes smallest is determined in accordance with a least-square center method on the surface of the target material, and this center is defined as the "central point on the target material surface". The ion beam is normally applied to the central point on the target material surface.

In the present invention, the "distance between the target material surface and each of the upper surfaces of convex portions on the base material" serves to define the shortest distance between the target material surface and each of the upper surfaces of the convex portions on the base material when sputter particles fly in a dispersing manner from the target material surface to the upper surfaces. Therefore, in a case where the "shortest distance between a central point on the target material surface and each of the upper surfaces of the convex portions on the base material" and the "shortest distance between the target material surface and each of the upper surfaces of the convex portions on the base material when sputter particles fly in a dispersing manner from the target material surface to the upper surfaces" are clearly different from each other, for example in a case where an ion beam is applied so as to miss the central point on the target material surface, a virtual "central point on the target material surface" should be determined based upon a region irradiated with the ion beam, and the "distance between the target material surface and each of the upper surfaces of the convex portions on the base material" should be calculated based upon this virtual "central point on the target material surface".

In the ion gun deposition method, the fact that plasma is not formed in the deposition chamber enables high vacuum deposition and thereby improves the straight advancing properties of sputter particles.

Thus, by forming the magnetic layer in accordance with the ion gun deposition method, it is possible to form the magnetic layer on the upper surfaces of the convex portions and also to reduce attachment of the sputter particles to side surfaces of the convex portions and thereby reduce the thickness of the magnetic layer on the side surfaces of the convex portions.

FIG. 3 is a schematic diagram for explaining the thickness of a magnetic layer formed on upper surfaces of convex portions and the thickness of the magnetic layer formed on side surfaces of the convex portions, in a magnetic transfer master carrier of the present invention.

When the arithmetic mean value of thicknesses of the magnetic layer on the upper surfaces of the convex portions (shown by the reference numeral 3 in FIG. 3) is denoted by A, and the maximum thickness of the magnetic layer on the side surfaces perpendicular to the upper surfaces of the convex portions is denoted by B, the ratio B/A is preferably 1/6 or less. When the ratio (B/A) is greater than 1/6, a signal related to initial magnetization, which corresponds to concave portions of the magnetic transfer master carrier, is reversed at the time of magnetic transfer, and the signal quality may degrade as a result. The term "concave portions" means areas which are relatively smaller in height than the convex portions in the concavo-convex pattern formed on the magnetic transfer master carrier.

The direction relevant to the expression "perpendicular to the upper surfaces of the convex portions" is the same as the radius direction (direction in which the convex portions are aligned) of concentric circles of the disk-shaped base material.

The magnetic layer on the upper surfaces of the convex portions can be measured for thickness, using a stylus profilometer (DEKTAK 6M, manufactured by ULVAC, Inc.), for example. The arithmetic mean value A of thicknesses of the magnetic layer on the upper surfaces of the convex portions can be worked out by measuring the thicknesses of the magnetic layer at places where the distances (radii) from the center of the disk-shaped base material are 5 mm, 10 mm, 20 mm and 30 mm respectively (four places at intervals of 90°: 16 places in total), and calculating the arithmetic mean value A of the thicknesses of the magnetic layer at those 16 places.

The maximum thickness of the magnetic layer on the side surfaces of the convex portions can be measured, for example, by producing an ultrathin section with the use of an FIB (focused ion beam), then observing its cross-section with the use of a TEM (transmission electron microscope). The maximum thickness B of the magnetic layer on the side surfaces of the convex portions is determined by measuring the thicknesses of the magnetic layer on the side surfaces of any 20 of the convex portions, and selecting the value of the greatest thickness.

### <Base Material>

The shape, structure, size, material and the like of the base material are not particularly limited and may be suitably selected in accordance with the intended use. For example, the shape will be a disk-like shape in the case of an information recording medium. The structure may be a single-layer structure or a laminated structure. The material may be suitably selected from known materials for base materials, for example nickel, aluminum, glass, silicon, quartz and transparent resin. These materials for base materials may be used individually or in combination.

For the base material, an appropriately synthesized product or a commercially available product may be used.

The thickness of the base material is not particularly limited and may be suitably selected in accordance with the intended use. It is preferably 50 µm or greater, more preferably 100 µm or greater.

A magnetic layer, which is formed of a magnetic material and provided at least on upper surfaces of a plurality of convex portions in a concavo-convex pattern that is formed by arranging the plurality of convex portions on a surface of the base material, is specifically exemplified by a perpendicular magnetic recording film in a perpendicular magnetic recording medium.

### - Method for Patterning Base Material -

The method for patterning the base material with a concavo-convex structure may employ at least part of the methods described in Japanese Patent (JP-B) No. 1,888,363, JP-A Nos. 09-97419 and 2001-110050, and US Patent No. 6,518,189, for example. Specifically, the method is an appropriate combination of a photolithographic method, an etching method, a vacuum film-forming method and a liftoff method that already exist.

Additionally, a protective film of diamond-like carbon (DLC), sputtered carbon or the like is preferably provided on the magnetic layer, and further, a lubricant layer may be provided on the protective film. In this case, it is desirable that a DLC film having a thickness of 3 nm to 30 nm as the protective film, and the lubricant layer be provided. Also, an adhesion enhancing layer formed of Si or the like may be provided between the magnetic layer and the protective film. The lubricant has an effect of reducing degradation of durability, for example due to creation of scratches by friction, when a deviation caused in the step of bringing the magnetic transfer master carrier into contact with a slave disk is corrected.

Examples of transferred information include a servo signal for tracking, a clock signal and an address information signal.

The following explains, with reference to the drawings, a magnetic transfer technique for perpendicular magnetic recording, to which the magnetic transfer master carrier of the present invention is applied.

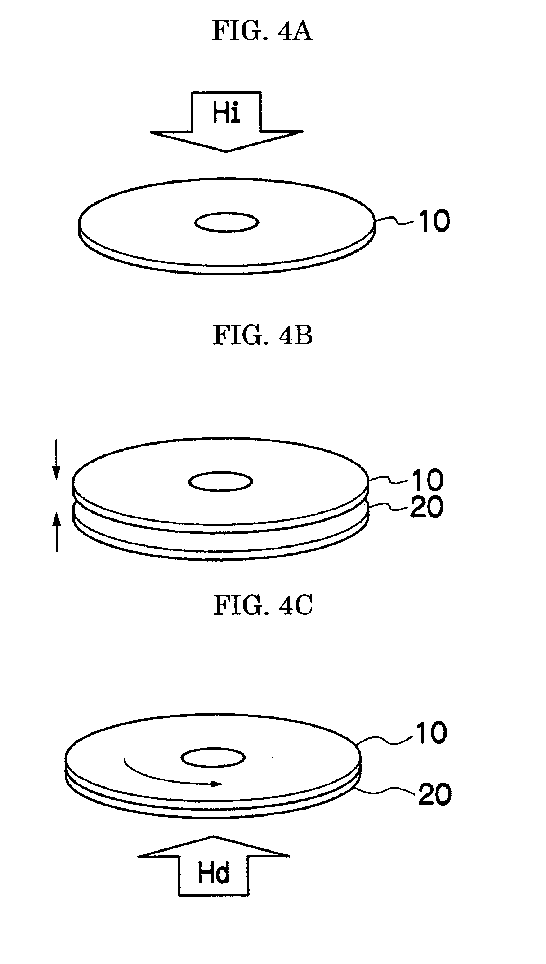

FIGS. 4A to 4C are schematic diagrams each showing a step in a magnetic transfer method for perpendicular magnetic recording. In FIGS. 4A to 4C, the numeral 10 denotes a slave disk (otherwise expressed as "perpendicular magnetic recording medium") serving as a magnetic disk to which information is transferred, and the numeral 20 denotes a master disk serving as a master carrier.

Firstly, as shown in FIG. 4A, the slave disk 10 is initially magnetized (initially magnetizing step) by applying a DC magnetic field (Hi) thereto in a perpendicular direction; then as shown in FIG. 4B, the master disk 20 and the slave disk 10 are closely attached to each other (closely attaching step); and, as shown in FIG. 4C, with the disks 10 and 20 closely attached to each other, magnetic transfer is performed (transfer step) by applying a magnetic field (Hd) which acts in the opposite direction to the direction of the magnetic field (Hi) applied at the time of the initial magnetization.

### [Explanation of Transfer Magnetic Disk (Slave Disk)]

The slave disk 10 used in the present example includes a disk-shaped substrate, and magnetic layer(s) composed of perpendicular magnetization film(s), which is/are formed over one or both surfaces of the substrate. Specific examples thereof include high-density hard disks.

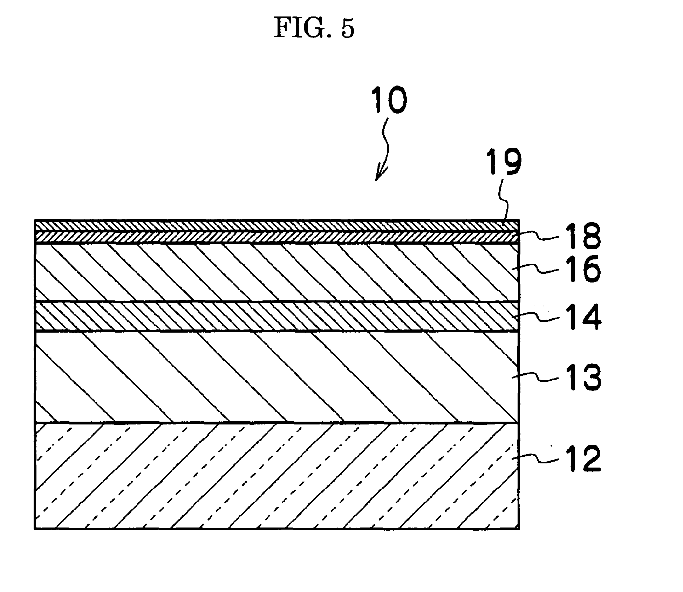

FIG. 5 shows a schematic cross-sectional view of the slave disk 10. As shown in FIG. 5, the slave disk 10 includes a nonmagnetic substrate 12 made, for example, of glass, and also includes a soft magnetic layer (soft magnetic underlying layer: SUL) 13, a nonmagnetic layer (intermediate layer) 14 and a magnetic layer (perpendicular magnetic recording layer) 16 formed over the substrate 12. Further, a protective layer 18 and a lubricant layer 19 are formed over the magnetic layer 16. Note that although an example in which the magnetic layer 16 is formed over one surface of the substrate 12 is herein shown, an aspect in which magnetic layers are formed over both surfaces of the substrate 12 is possible as well.

The disk-shaped substrate 12 is made of a nonmagnetic material such as glass or Al (aluminum). After the soft magnetic layer 13 has been formed on this substrate 12, the nonmagnetic layer 14 and the magnetic layer 16 are formed over the soft magnetic layer 13.

The soft magnetic layer 13 is useful in that the perpendicular magnetization state of the magnetic layer 16 can be stabilized and sensitivity at the time of recording and reproduction can be improved. The material used for the soft magnetic layer 13 is preferably selected from soft magnetic materials, for example CoZrNb, FeTaC, FeZrN, FeSi alloys, FeAl alloys, FeNi alloys such as permalloy, and FeCo alloys such as permendur. This soft magnetic layer 13 is provided with magnetic anisotropy in radius directions (in a radial manner) from the center of the disk toward the outside.

The thickness of the soft magnetic layer 13 is preferably 50 nm to 2,000 nm, more preferably 80 nm to 400 nm.

The nonmagnetic layer 14 is provided in order to increase the magnetic anisotropy of the subsequently formed magnetic layer 16 in a perpendicular direction or for some other reason. As the material used for the nonmagnetic layer 14, Ti (titanium), Cr (chromium), CrTi, CoCr, CrTa, CrMo, NiAl, Ru (ruthenium), Pd (palladium), Ta, Pt or the like is preferable. The nonmagnetic layer 14 is formed by depositing the material by means of sputtering. The thickness of the nonmagnetic layer 14 is preferably 10 nm to 150 nm, more preferably 20 nm to 80 nm.

The magnetic layer 16 is formed of a perpendicular magnetization film (which is configured such that magnetization easy axes in a magnetic film are oriented perpendicularly to the substrate), and information is to be recorded on this magnetic layer 16. The material used for the magnetic layer 16 is preferably selected from Co (cobalt), Co alloys (CoPtCr, CoCr, CoPtCrTa, CoPtCrNbTa, CoCrB, CoNi, etc.), Co alloy-SiO₂, Co alloy-TiO₂, Fe, Fe alloys (FeCo, FePt, FeCoNi, etc.) and the like. High in magnetic flux density, any of these materials can have perpendicular magnetic anisotropy by adjustment of a deposition condition and/or its composition. The magnetic layer 16 is formed by depositing the material by means of sputtering. The thickness of the magnetic layer 16 is preferably 10 nm to 500 nm, more preferably 20 nm to 200 nm.

In the present embodiment, a disk-shaped glass substrate having an outer diameter of 65 mm is used as the substrate 12 of the slave disk 10, the glass substrate is set in a chamber of a sputtering apparatus, and the pressure is reduced to 1.33 × 10⁻⁵ Pa (1.0 × 10⁻⁷ Torr); thereafter, Ar (argon) gas is introduced into the chamber, and a first SUL having a thickness of 80 nm is deposited by sputtering with the use of a CoZrNb target provided in the chamber, the temperature of the substrate also in the chamber being set at room temperature. Subsequently, a Ru layer having a thickness of 0.8 nm is deposited on the first SUL by sputtering with the use of a Ru target provided in the chamber. Further, a second SUL having a thickness of 80 nm is deposited on the Ru layer by sputtering with the use of a CoZrNb target. With a magnetic field of 50 Oe or higher being applied in radius directions, the temperature of the SULs thus deposited by sputtering is raised to 200°C and then cooled to room temperature.

Next, sputtering deposition is carried out by means of electric discharge under such a condition that the substrate temperature is made equal to room temperature, with the use of a CrTi target. In this manner, the nonmagnetic layer 14 formed of CrTi is deposited so as to have a thickness of 60 nm.

Thereafter, in a similar manner, Ar gas is introduced, and sputtering deposition is carried out by means of electric discharge under such a condition that the substrate temperature is made equal to room temperature, with the use of a CoCrPt target provided in the same chamber. In this manner, the magnetic layer 16 which is formed of CoCrPt-SiO₂ and has a granular structure is deposited so as to have a thickness of 25 nm.

By the above-mentioned process, the transfer magnetic disk (slave disk) 10, in which the soft magnetic layer, the nonmagnetic layer and the magnetic layer have been deposited over the glass substrate, can be produced.

### [Initial Magnetization of Slave Disk]

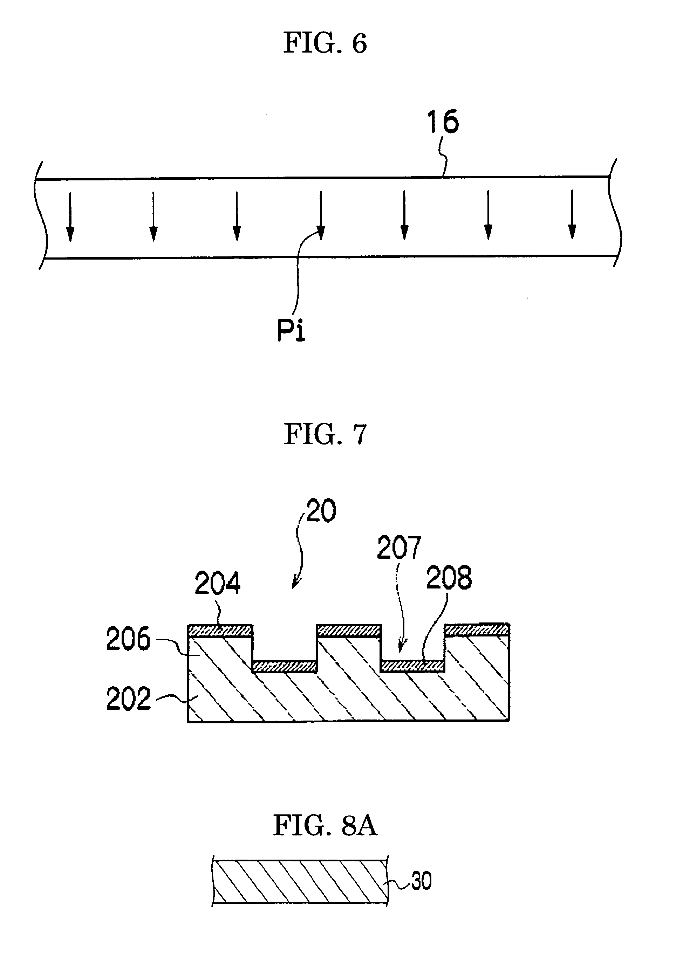

Next, initial magnetization of the slave disk 10 formed is performed. As explained with FIG. 4A, initial magnetization (DC magnetization) of the slave disk 10 is performed by generation of an initializing magnetic field Hi with the use of a device (magnetic field applying unit not shown) capable of applying a DC magnetic field perpendicularly to the surface of the slave disk 10. Specifically, it is performed by generating as the initializing magnetic field Hi a magnetic field which is greater than or equal to the coercive force Hc of the slave disk 10 in strength. In this initially magnetizing step, the magnetic layer 16 of the slave disk 10 is subjected to an initial magnetization Pi in one direction perpendicular to the disk surface, as shown in FIG. 6. It should be noted that this initially magnetizing step may be carried out by rotating the slave disk 10 relatively to the magnetic field applying unit.

### [Embodiment of Master Disk]

Next, the master disk 20, which is a master carrier, will be explained. FIG. 7 shows an embodiment of the master disk 20. As to the form of the master disk 20, an embodiment in which a magnetic layer 204 is formed on the concavo-convex surface of a base material 202 as shown in FIG. 7 is preferable.

In the embodiment shown in FIG. 7, the magnetic layer 204 formed on the upper surfaces of convex portions 206 of the base material 202 constitutes bit portions (portions to reverse initial magnetization) corresponding to a transfer signal. In FIG. 7, although a magnetic layer 208 is formed on concave portions 207 (equivalent to "non-transfer portions") of the base material 202, provision of the magnetic layer 208 on the concave portions 207 is not compulsory. Nevertheless, in view of facilitation of production, the structure in which the magnetic layer 204 and the magnetic layer 208 are provided on the surfaces of the convex portions 206 and the concave portions 207 respectively, as shown in FIG. 7, is simpler than a structure in which the magnetic layer 204 is selectively provided on the surfaces of the convex portions 206.

In the embodiment shown in FIG. 7, the places where the magnetic layer 204 is provided at the portions (bit portions) corresponding to the transfer signal are in the highest positions (except for a protective layer, a lubricant layer, etc.) of the master disk 20, and places other than the bit portions are relatively lower in height than the magnetic layer 204 located at the bit portions. In other words, the master disk 20 has as a top layer the magnetic layer 204 located at the bit portions (however, a protective layer and a lubricant layer may be provided over the magnetic layer 204), and as non-bit portions constitute concave portions which are relatively lower in height, the disk surface includes a concavo-convex surface.

### [Method for Producing Master Disk]

Next, an example of a method for producing a master disk will be explained based upon FIGS. 8A to 8J.

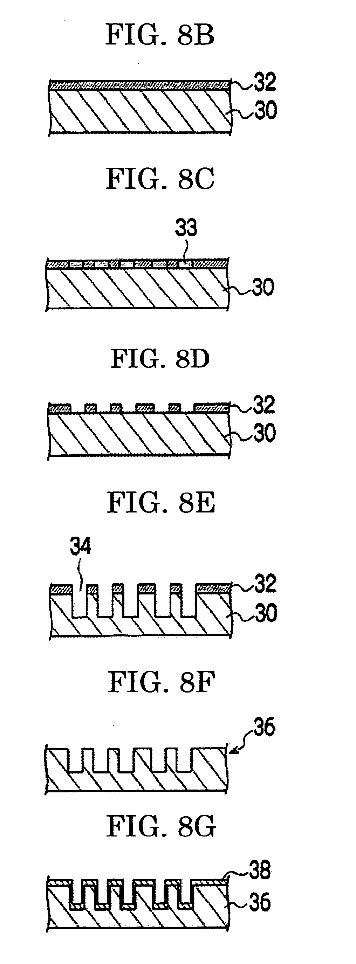

Firstly, as shown in FIG. 8A, an original plate (Si substrate) 30 which is a silicon wafer whose surface is smooth is prepared, an electron beam resist solution is applied onto this original plate 30 by spin coating or the like so as to form a resist layer 32 thereon (see FIG. 8B), and the resist layer 32 is baked (pre-baked).

Next, the original plate 30 is set on a high-precision rotary stage or X-Y stage provided in an electron beam exposure apparatus (not shown), an electron beam modulated correspondingly to a servo signal is applied while the original plate 30 is being rotated, and a predetermined pattern 33 is formed on the substantially entire surface of the resist layer 32; for example, a pattern that corresponds to a servo signal and that linearly extends in radius directions from the rotational center toward each track is formed at portions corresponding to frames on the circumference by writing exposure (electron beam writing) (see FIG. 8C).

Subsequently, as shown in FIG. 8D, the resist layer 32 is developed, the exposed (written) portions are removed, and a coating layer having a desired thickness is formed by the remaining resist layer 32. This coating layer serves as a mask in a subsequent step (etching step). Additionally, the resist applied onto the original plate 30 can be of positive type or negative type; it should be noted that an exposed (written) pattern formed when a positive-type resist is used is an inversion of an exposed (written) pattern formed when a negative-type resist is used. After this developing process, a baking process (post-baking) is carried out to enhance adhesion between the resist layer 32 and the original plate 30.

Subsequently, as shown in FIG. 8E, part of the original plate 30 is removed (etched) from an opening portion 34 of the resist layer 32, such that hollows having a predetermined depth are formed in the original plate 30. As to this etching, anisotropic etching is preferable in that an undercut (side etching) can be minimized. As such anisotropic etching, reactive ion etching (RIE) can be suitably employed.

Thereafter, as shown in FIG. 8F, the resist layer 32 is removed. Regarding the method for removing the resist layer 32, ashing can be employed as a dry method, and a removal method using a release solution can be employed as a wet method. By means of the ashing process, an original master 36 on which an inversion of a desired concavo-convex pattern is formed is produced.

Subsequently, as shown in FIG. 8G, a conductive layer 38 is formed on the surface of the original master 36 so as to have a uniform thickness. The method for forming this conductive layer 38 can be suitably selected from metal deposition methods and the like, including PVD (physical vapor deposition), CVD (chemical vapor deposition), sputtering and ion plating. Formation of one layer made of a conductive film (denoted by the reference numeral 38), as described above, makes it possible to obtain such an effect that a metal can be uniformly electrodeposited in a subsequent step (electroforming step). The conductive layer 38 is preferably a film composed mainly of Ni. Such a film composed mainly of Ni can be easily formed and is therefore suitable as the conductive film. Although the thickness of the conductive layer 38 is not particularly limited, it is generally several tens of nanometers or so.

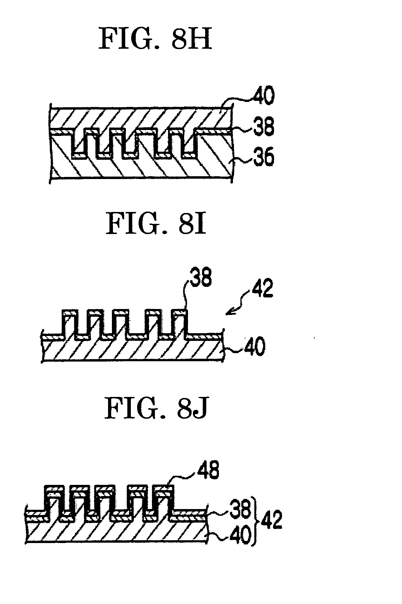

Then, as shown in FIG. 8H, a metal plate 40 made of a metal (Ni in this case), which has a desired thickness, is laid over the surface of the original master 36 by electroforming (reversed plate forming step). This step is performed such that the original master 36 is immersed in an electrolytic solution placed in an electroforming device, the original master 36 serves as an anode, and an electric current is passed between the anode and a cathode. The concentration of the electrolytic solution, the pH, the manner in which the electric current is applied, etc. are required to be adjusted under an optimized condition where the metal plate 40 laid (which is a master substrate equivalent to the base material 202 explained with FIG. 7) does not warp.

The original master 36 over which the metal plate 40 has been laid is taken out from the electrolytic solution in the electroforming device and then immersed in purified water placed in a release bath (not shown).

Subsequently, in the release bath, the metal plate 40 is separated from the original master 36 (separating step), and a master substrate 42 having an inverted concavo-convex pattern is thus obtained from the original master 36, as shown in FIG. 8I.

Subsequently, as shown in FIG. 8J, a magnetic layer 48 constituted by a soft magnetic film is formed on the concavo-convex surface of the master substrate 42. On this occasion, by depositing the magnetic layer 48 in accordance with an ion gun deposition method, it is possible to reduce the thickness of the magnetic layer on side surfaces of convex portions. Examples of the material for the magnetic layer 48 include Co₄Pt₁ (atomic ratio). The thickness of the magnetic layer 48 is preferably in the range of 10 nm to 320 nm, more preferably in the range of 20 nm to 300 nm, even more preferably in the range of 40 nm to 100 nm.

Thereafter, the master substrate 42 is subjected to punching such that its inner and outer diameters have predetermined sizes. By the above-mentioned process, a master disk 20 having a concavo-convex pattern, provided with the magnetic layer 48 (equivalent to the magnetic layer 204 in FIG. 7), is produced. The concavo-convex pattern thus formed on the master disk 20 is produced such that the ratio (Sa/La) of the width Sa of a concave area (space portion) in the track direction (circumferential direction) to the width La of a convex area (land portion) in the track direction (circumferential direction) is in the range of 1.3/1 to 1.9/1, preferably in the range of 1.45/1 to 1.75/1.

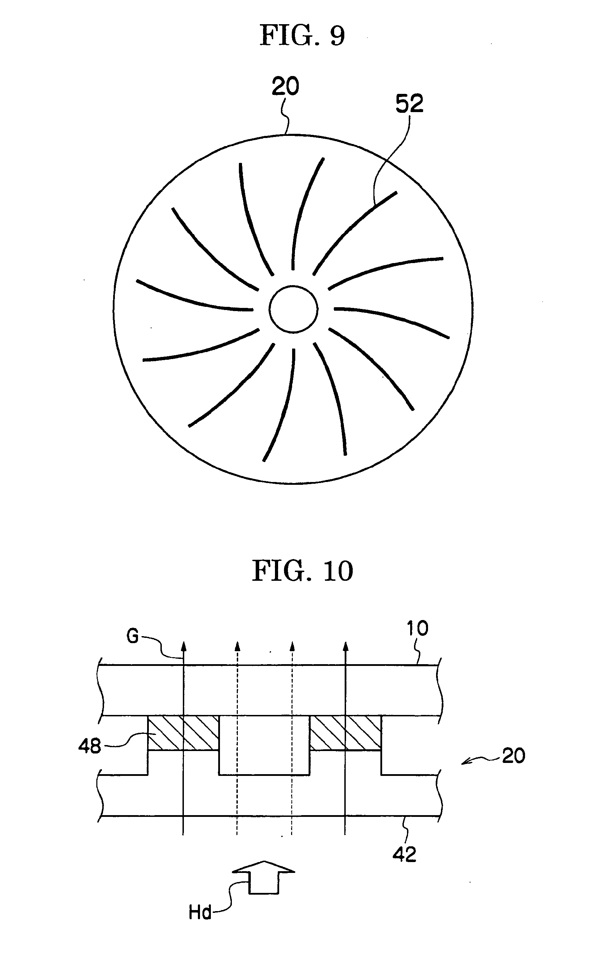

FIG. 9 is a top view of the master disk 20. As shown in the figure, a servo pattern 52 that is a concavo-convex pattern is formed on the surface of the master disk 20. Also, although not shown in the figure, a protective film made, for example, of diamond-like carbon may be provided over the magnetic layer 48 (see FIG. 8J) on the surface of the master disk 20, and further, a lubricant layer may be provided over the protective film.

The provision of the protective film is for preventing a case where when the master disk 20 is closely attached to a slave disk 10, the magnetic layer 48 easily gets scratched, making the use of the master disk 20 impossible. The lubricant layer has an effect of preventing, for example, creation of scratches attributed to friction caused when the master disk 20 is brought into contact with the slave disk 10, and thusly improving the durability of the master disk 20.

Specifically, a preferable structure is that a carbon film having a thickness of 2 nm to 30 nm is formed as a protective film, and a lubricant layer is formed thereon. Also, in order to enhance adhesion between the magnetic layer 48 and the protective film, an adhesion enhancing layer of Si or the like may be formed on the magnetic layer 48, then the protective film may be formed.

### [Closely Attaching Step in Magnetic Transfer]

Next, a step (closely attaching step) is carried out in which the master disk 20 that has been produced by the above-mentioned process and the slave disk 10 that has been initially magnetized are laid on top of each other as shown in FIG. 4B and closely attached to each other.

In the closely attaching step, as shown in FIG. 4B, the surface of the master disk 20 where the protrusion pattern (concavo-convex pattern) has been formed and the surface of the slave disk 10 where the magnetic layer 16 has been formed are closely attached to each other with a predetermined pressing force.

If necessary, before closely attached to the master disk 20, the slave disk 10 is subjected to a cleaning process (burnishing) in which minute protrusions or attached dust on its surface is removed using a glide head, a polisher or the like.

As to the closely attaching step, there is a case where the master disk 20 is closely attached only to one surface of the slave disk 10 as shown in FIG. 4B, and there is another case where master disks are closely attached to both surfaces of a transfer magnetic disk, with magnetic layers having been formed over both the surfaces. The latter case is advantageous in that transfer to both the surfaces can be simultaneously performed.

### [Magnetic Transfer Step]

Next, a magnetic transfer step will be explained based upon FIG. 4C.

To the slave disk 10 and the master disk 20 that have been closely attached to each other by the closely attaching step, a recording magnetic field Hd is generated in the opposite direction to the direction of the initializing magnetic field Hi by a magnetic field applying unit (not shown). Magnetic transfer is performed as a magnetic flux produced by generating the recording magnetic field Hd enters the slave disk 10 and the master disk 20.

In the present embodiment, the value of the recording magnetic field Hd is approximately equal to that of Hc of the magnetic material constituting the magnetic layer 16 of the slave disk 10.

In the magnetic transfer, while the slave disk 10 and the master disk 20 closely attached to each other are being rotated by a rotating unit (not shown), the recording magnetic field Hd is applied by the magnetic field applying unit, and information in the form of the protrusion pattern, recorded on the master disk 20, is magnetically transferred to the magnetic layer 16 of the slave disk 10. Apart from this structure, a mechanism for rotating the magnetic field applying unit may be provided such that the magnetic field applying unit is rotated relatively to the slave disk 10 and the master disk 20.

FIG. 10 shows a cross-section of the slave disk 10 and the master disk 20 in the magnetic transfer step. When the recording magnetic field Hd is applied, with the slave disk 10 closely attached to the master disk 20 having the concavo-convex pattern as shown in the figure, a magnetic flux G becomes strong in a region where convex portions of the master disk 20 and the slave disk 10 are in contact with each other, the recording magnetic field Hd causes the magnetization direction of the magnetic layer 48 of the master disk 20 to align with the direction of the recording magnetic field Hd, and thus the magnetic information is transferred to the magnetic layer 16 of the slave disk 10. Meanwhile, at concave portions of the master disk 20, the magnetic flux G generated by the application of the recording magnetic field Hd is weaker than at the convex portions, and the magnetization direction of the magnetic layer 16 of the slave disk 10 does not change, so that the initially magnetized state remains unchanged.

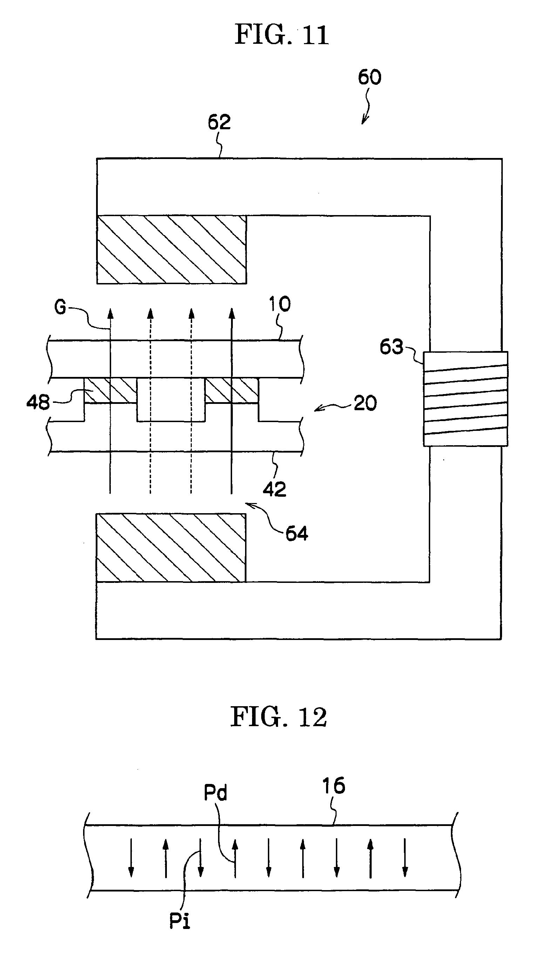

FIG. 11 shows in a detailed manner a magnetic transfer apparatus used for magnetic transfer. The magnetic transfer apparatus includes a magnetic field applying unit 60 composed of an electromagnet which is formed by winding a coil 63 around a core 62. By applying an electric current to the coil 63, a magnetic field is generated in a gap 64 perpendicularly to the master disk 20 and the magnetic layer 16 of the slave disk 10 which are closely attached to each other. The direction of the magnetic field generated can be changed depending upon the direction of the electric current applied to the coil 63. Therefore, this magnetic transfer apparatus makes it possible to initially magnetize the slave disk 10 and also to perform magnetic transfer.

In the case where this magnetic transfer apparatus is used to perform initial magnetization and then to carry out magnetic transfer, an electric current is applied to the coil 63 of the magnetic field applying unit 60, which flows in the opposite direction to the direction of an electric current applied to the coil 63 at the time of the initial magnetization. This makes it possible to generate a recording magnetic field in the opposite direction to the magnetization direction at the time of the initial magnetization. In the magnetic transfer, while the slave disk 10 and the master disk 20 closely attached to each other are being rotated, the recording magnetic field Hd is applied by the magnetic field applying unit 60, and the information in the form of the protrusion pattern, recorded on the master disk 20, is magnetically transferred to the magnetic layer 16 of the slave disk 10; accordingly, the rotating unit (not shown) is provided. Apart from this structure, a mechanism for rotating the magnetic field applying unit 60 may be provided such that the magnetic field applying unit 60 is rotated relatively to the slave disk 10 and the master disk 20.

In the present embodiment, magnetic transfer is performed by applying a magnetic field which is equivalent in strength to 60% to 125%, preferably 70% to 115%, of the coercive force Hc of the magnetic layer 16 of the slave disk 10 used in the present embodiment.

Thus, on the magnetic layer 16 of the slave disk 10, information of a magnetic pattern, such as a servo signal, is recorded as a recording magnetization Pd which acts in the opposite direction to the direction of an initial magnetization Pi (see FIG. 12).

In carrying out the present invention, the protrusion pattern formed on the master disk 20 may be a negative pattern, as opposed to the positive pattern explained with FIG. 8J. In this case, a similar magnetization pattern can be magnetically transferred to the magnetic layer 16 of the slave disk 10 by reversing the direction of the initializing magnetic field Hi and the direction of the recording magnetic field Hd. Also, although a case where the magnetic field applying unit is an electromagnet has been explained in the present embodiment, a permanent magnet which similarly generates a magnetic field may be used as well.

### EXAMPLES

The following explains Examples of the present invention. It should, however, be noted that the present invention is not confined to these Examples in any way.

### (Examples 1 to 4 and Comparative Examples 1 to 4)

### - Production of Magnetic Transfer Master Carrier -

Magnetic transfer master carriers were produced by the method shown in FIGS. 8A to 8J.

Specifically, in the magnetic layer forming step shown in FIG. 8J, a perpendicular magnetic recording layer material (Fe₇₀-CO₃₀ atomic %) was formed over convex portions (100 nm each in width) of each magnetic transfer master carrier so as to have a thickness of 50 nm under the deposition conditions shown in Table 1, employing the following ion gun deposition conditions and sputtering deposition conditions.

### <Sputtering Deposition Condition>

Deposition pressure: 0.05 Pa to 0.2 Pa, Distance between target and base material: 200 mm to 400 mm, DC power: 1,000 W

In the sputtering method, when a magnetic layer was formed such that the arithmetic mean value A of its thicknesses on upper surfaces of the convex portions became 50 nm, the maximum thickness B of the magnetic layer on side surfaces of the convex portions could not be made smaller than 12 nm.

### <Ion Gun Deposition Condition>

Source of ions: DMONEX CD ION SOURCE manufactured by DIAMONEX (USA), Deposition pressure: 0.001 Pa, Process gas (Ar: 40 sccm), Acceleration voltage: 90 V, Anodic current: 0.8 A, Distance between target and base material: 75 mm to 400 mm

In the ion gun deposition method, a target material in the form of a flat plate which was rectangular as seen from above was used, and an ion beam was applied toward the intersection of the diagonals on the surface of the target material.

As to the magnetic transfer master carriers thus produced, the thicknesses of the magnetic layers were measured and evaluations were carried out with respect to reversal of initial magnetization, as described below. The results are shown in Table 2.

### (1) Measurement of Magnetic Layer Thickness

Using a stylus profilometer (DEKTAK 6M, manufactured by ULVAC, Inc.), the arithmetic mean value A of thicknesses of each magnetic layer on the upper surfaces of the convex portions of the base material was worked out by measuring the thicknesses of the magnetic layer at places where the distances (radii) from the center of the disk-shaped base material were 5 mm, 10 mm, 20 mm and 30 mm respectively (four places at intervals of 90°: 16 places in total), and calculating the arithmetic mean value A of the thicknesses of the magnetic layer at those 16 places.

The maximum thickness B of each magnetic layer on the side surfaces of the convex portions was measured by producing an ultrathin section with the use of an FIB (focused ion beam), then observing its cross-section with the use of a TEM (transmission electron microscope). As to the maximum thickness B of each magnetic layer on the side surfaces of the convex portions of the base material, the thicknesses of the magnetic layer on the side surfaces of any 20 of the convex portions were measured, and the value of the greatest thickness was selected as the maximum thickness B.

Note that the surfaces perpendicular to the upper surfaces of the convex portions of the base material are defined as "side surfaces" of the convex portions of the base material.

### (2) Evaluation of Reversal of Initial Magnetization

The waveform of a preamble section of a transferred servo signal was imported into an oscilloscope, and the number of pulses when the output of initial magnetization was reversed by 30% was counted. In the case where there was a part in which the number or pulses was greater, even by only one, than that representing a reversal of 30%, the frame was judged to be defective. In each of Examples 1 to 4 and Comparative Examples 1 to 4, the number of defective frames among 190 frames was counted.

**Table 1**

| | Method for forming magnetic layer | Deposition pressure | Distance between target and base material |
|---|---|---|---|
| Example 1 | Ion gun | 0.001 Pa | 75 mm |
| Example 2 | Ion gun | 0.001 Pa | 100 mm |
| Example 3 | Ion gun | 0.001 Pa | 200 mm |
| Example 4 | Ion gun | 0.001 Pa | 400 mm |
| Comparative Example 1 | Sputtering | 0.2 Pa | 200mm |
| Comparative Example 2 | Sputtering | 0.1 Pa | 200mm |
| Comparative Example 3 | Sputtering | 0.05 Pa | 200 mm |
| Comparative Example 4 | Sputtering | 0.05 Pa | 400mm |

**Table 2**

| | Arithmetic mean value of thicknesses of magnetic layer on upper surfaces of convex portions A | Maximum thickness of magnetic layer on side surfaces of convex portions B | Ratio (B/A) | Evaluation of reversal of initial magnetization |
|---|---|---|---|---|
| Example 1 | 50 nm | 12 nm | 0.24 | 11/190 (defective) |
| Example 2 | 50 nm | 12 nm | 0.24 | 18/190 (defective) |
| Example 3 | 50 nm | 10 nm | 0.2 | 3/190 (defective) |
| Example 4 | 50 nm | 8 nm | 0.16 | 0/190 (defective) |
| Comparative Example 1 | 50 nm | 15 nm | 0.3 | 57/190 (defective) |
| Comparative Example 2 | 50 nm | 13 nm | 0.26 | 41/190 (defective) |
| Comparative Example 3 | 50 nm | 13 nm | 0.26 | 35/190 (defective) |
| Comparative Example 4 | 50 nm | 12 nm | 0.24 | 12/190 (defective) |

Judging from the results shown in Table 2, it was found that when a perpendicular magnetic layer was formed over a magnetic transfer master carrier having a concavo-convex pattern, use of the ion gun deposition method made it possible to reduce the magnetic layer thickness B, which is the thickness of the magnetic layer on side surfaces of convex portions. Furthermore, it was found that when the magnetic layer thickness B was made as small as possible with respect to the magnetic layer thickness A, which is the thickness of the magnetic layer on upper surfaces of the convex portions, the occurrence of reversal of a signal related to initial magnetization could be reduced.

The magnetic transfer master carrier of the present invention is capable of reducing the occurrence of reversal of initial magnetization at portions where the initial magnetization should not be reversed, and greatly improving the quality of a transfer signal. Hence, the magnetic transfer master carrier can be particularly suitably used for magnetically transferring information to a perpendicular magnetic recording medium.

## Claims

1. A magnetic transfer master carrier comprising:
a base material,
a concavo-convex pattern formed by arranging a plurality of convex portions on a surface of the base material, and
a magnetic layer provided at least on upper surfaces of the convex portions,
wherein the magnetic layer is formed by an ion gun deposition method in which a target material is irradiated with an ion beam and a layer is deposited with sputter particles sputtered from the target material.

2. The magnetic transfer master carrier according to claim 1, wherein the distance between a surface of the target material and each of the upper surfaces of the convex portions on the base material is 200 mm or more.

3. The magnetic transfer master carrier according to one of claims 1 and 2, wherein when the arithmetic mean value of thicknesses of the magnetic layer on the upper surfaces of the convex portions is denoted by A, and the maximum thickness of the magnetic layer on side surfaces perpendicular to the upper surfaces is denoted by B, the ratio B/A is 1/6 or less.

4. The magnetic transfer master carrier according to any one of claims 1 to 3, wherein the magnetic layer has perpendicular magnetic anisotropy.

5. A magnetic recording medium,
produced by a magnetic transfer method using the magnetic transfer master carrier according to any one of claims 1 to 4.
